# EUROPÄISCHE PATENTSCHRIFT

(11) **EP 0 386 521 B1**
(45) Veröffentlichungstag und Bekanntmachung des Hinweises auf die Patenterteilung: **28.04.1993**
(21) Anmeldenummer: 90103302.7
(22) Anmeldetag: 21.02.1990
(51) Int. Cl.: G01J 3/42, G01N 21/74

(54) **Vorrichtung zum elektrothermischen Atomisieren von Proben für spektroskopische Zwecke**
Apparatus for the electrothermal atomization of samples for spectroscopic purposes
Dispositif pour l'atomisation électrothermique d'échantillons dans des buts spectroscopiques

(30) Priorität: 08.03.1989 DE 3907454
(43) Veröffentlichungstag der Anmeldung: 12.09.1990
(73) Patentinhaber: BODENSEEWERK PERKIN-ELMER GMBH, D-88662 Überlingen (DE)
(72) Erfinder: Tamm, Rolf, D-7777 Salem 2 (DE); Rödel, Günther, D-7776 Owingen (DE); Stengele, Erich, D-7776 Taisersdorf (DE)
(74) Vertreter: Grünecker, Kinkeldey, Stockmair & Schwanhäusser Anwaltssozietät

(56) Entgegenhaltungen:
- EP-A- 0 165 643
- DE-A- 2 945 646
- DE-A- 3 008 938
- DE-A- 3 044 627
- DE-B- 2 710 861
- US-A- 3 895 873
- SPECTROCHIMICA ACTA, Band 33B (1978), Oxford, New York, Frankfurt B.V.L'vov "Electrothermal atomization - the way toward absolute methods of atomic absorption analysis", Seiten 153-193

## Beschreibung

### Technisches Gebiet

Die Erfindung betrifft eine Vorrichtung zum elektrothermischen Atomisieren von Proben für spektroskopische Zwecke, enthaltend.
(a) einen Ofenkörper aus einem elektrisch leitenden, spektroskopisch inerten Material,
(b) einen seitlichen Durchbruch in dem Ofenkörper,
(c) Mittel zum Hindurchleiten von elektrischem Strom durch diesen Ofenkörper,
(d) eine von dem Ofenkörper getrennte Probenaufnahme, die mit dem seitlichen Durchbruch des Ofenkörpers zusammenwirkt.

### Zugrundeliegender Stand der Technik

Die Erfindung ist insbesondere anwendbar bei der Atomabsorptions-Spektroskopie. Das ist eine Methode zur Bestimmung der Menge oder Konzentration eines bestimmten gesuchten Elements in einer Probe. Dabei wird durch eine Atomisierungsvorrichtung ein "Atomdampf" erzeugt, in welchem die Bestandteile der Probe in atomarer Form vorliegen. Durch diesen Atomdampf wird ein Meßlichtbündel von einer linienemittierenden Lichtquelle, beispielsweise einer Hohlkathodenlampe, hindurchgeleitet. Die in dem Meßlichtbündel enthaltenen Spektrallinien stimmen mit den Resonanzlinien eines gesuchten Elements überein, dessen Menge oder Konzentration in der Probe bestimmt werden soll. Das Meßlichtbündel erfährt dabei eine Absorption, die durch die Menge oder Konzentration des gesuchten Elements bestimmt ist. Im Idealfall, wird das Meßlichtbündel von den Atomen der anderen in der Probe enthaltenen Elemente nicht beeinflußt. Es wird dabei die Tatsache ausgenutzt, daß Atome aus einem Lichtbündel nur diejenigen Wellenlängen absorbieren, die sie bei entsprechender Anregung in der Lichtquelle emittieren. Die Schwächung des Meßlichtbündels in dem Atomdampf wird mittels eines Detektors gemessen und liefert ein Maß für die gesuchte Menge oder Konzentration.

Es ist bekannt, die Probe elektrothermisch zu atomisieren. Zu diesem Zweck wird die Probe in einen Ofen mit einem Ofenkörper aus Graphit eingebracht. Durch den Ofenkörper wird ein starker elektrischer Strom hindurchgeleitet, so daß der Ofenkörper auf eine hohe Temperatur aufgeheizt wird. Es bildet sich dann in dem Ofenkörper eine "Atomwolke" von Atomdampf aus. Der Ofenkörper hat einen Durchgang, durch welchen das Meßlichtbündel hindurchgeleitet wird, so daß es die "Atomwolke" durchsetzt.

Bei einer gebräuchlichen Ausführung ist der Ofenkörper ein Graphitrohr, das zwischen zwei ringförmigen Kontakten gehalten ist. Das Meßlichtbündel verläuft in Längsrichtung durch die Kontakte und die Bohrung des Graphitrohres. Die meist als Lösung vorliegende Probe wird durch eine seitliche Eingabeöffnung in das Graphitrohr eingebracht (DE-A- 24 13 781).

Der Strom durch das Graphitrohr wird nach einem bestimmten Programm verändert. Erst wird die Probe bei relativ niedriger Temperatur getrocknet, d.h. es wird das Lösungsmittel verdampft. Dann erfolgt in einem zweiten Schritt eine Veraschung oder Zersetzung der verbleibenden Probensubstanz. Schließlich wird das Graphitrohr auf die hohe Atomisierungstemperatur aufgeheizt, wobei die Messung stattfindet.

Es sind auch Öfen zur elektrothermischen Atomisierung bekannt, bei denen ein rohrförmiger Ofenkörper über seitliche Kontaktstücke in Umfangsrichtung von Strom durchflossen ist (US-A- 4 407 582, DE-A-35 34 417, "Analytical Chemistry 58 (1986),1973).

Es ist wünschenswert, die Atomisierung der Probe gegenüber der Aufheizung des Ofenkörpers zu verzögern solange, bis sich ein stationärer Temperaturzustand eingestellt hat, die Innenwandung des Ofenkörpers also ihre endgültige Temperatur erreicht hat. Es sind verschiedene Maßnahmen bekannt, durch welche eine solche Verzögerung erreicht wird.

Es ist bekannt, bei einer Vorrichtung zur elektrothermischen Atomisierung von Proben einen von dem Ofenkörper getrennten Probenträger vorzusehen, der in eine seitliche Öffnung des Ofenkörpers ragt und getrennt von dem Ofenkörper beheizt wird. Dann kann zunächst der Ofenkörper auf seine Gleichgewichtstemperatur gebracht werden, bevor die Heizung des Probenträgers eingeschaltet wird (DE-A-30 08 938, DE-A-30 44 627).

Es ist weiter bekannt, bei einer Vorrichtung zur elektrothermischen Atomisierung einer Probe die Probe auf einem von dem rohrförmigen Ofenkörper getrennten Probenträger aufzubringen und diesen Probenträger axial in die Bohrung des Ofens einzuführen (DE-A-3 044 627, DE-Z-"Fresenius Z. Anal. Chem." (1985), 145-150), GB-A-2 161 610).

Aus der EP-A-0 165 643 A2 ist eine Vorrichtung mit einem rohrförmigen Ofenkörper bekannt, bei dem ein vom Ofenkörper getrennter Probenträger durch einen seitlichen Schlitz in das Rohr eingeführt werden kann.

Es ist weiterhin bekannt, in einen als Graphitrohr ausgebildeten Ofenkörper einen als eine kleine Plattform ausgebildeten Probenträger einzusetzen. Die Plattform wird von dem beheizten Ofenkörper im wesentlichen indirekt über die von den Wänden des Ofenkörpers ausgesandte Strahlung beheizt, so dass die Aufheizung der Probe gegenüber der Aufheizung des Ofenkörpers verzögert wird ("Spectrochimica Acta", 33B (1978), 153-193).

Auf die kleine Plattform kann jedoch nur eine entsprechend kleine Menge von Probe aufgebracht werden. Es ist daher ein als Plattform ausgebildeter Probenträger bekannt, der in einen als Graphitrohr ausgebildeten Ofenkörper einsetzbar ist, wobei dieser Probenträger eine Vertiefung zur Aufnahme der Probe aufweist und nur längs zweier gegenüberliegender Längskanten an dem Ofenkörper geführt ist (DE-A-29 24 123, Firmendruckschrift "Varian GTA-96, Graphite Tube Atomizer", DE-U-G 87 14 925.7 sowie DE-U-88 088 51).

Aus der DE-A-27 10 861 ist eine Vorrichtung bekannt, bei der eine aufeinanderfolgende Kette von Probenträgern durch einen rohrförmigen Ofen hindurchgeführt wird, wobei die Proben im Ofen atomisiert werden. Das Trocknen und thermische Zersetzen der Proben erfolgt bereits vor dem Eintritt der Probenträger in den Ofen durch elektrische Widerstandserhitzung. Hierzu sind die Proben an einem Widerstandsdraht angeordnet oder es dienen kleine Wickel aus Widerstandsdraht oder Näpfchen aus einem entsprechenden Material als Probenträger.

Die US-A-3 895 873 beschreibt eine Atomisierungsvorrichtung zur elektrothermischen Atomisierung von Proben für die Atomabsorptions - Spektroskopie, bei welcher ein im Querschnitt quadratischer Ofenkörper in einer vertikalen Seitenwand oberhalb seiner unteren, waagerechten Seitenwand einen seitlichen Schlitz aufweist. In diesen seitlichen Schlitz ist ein mit einer Vertiefung zur Aufnahme der Probe versehener Probenträger einschiebbar. Der Probenträger ist in eingeschobenem Zustand in engem thermischen Kontakt mit dem Ofenkörper. Der Probenträger wird dabei vor dem Aufheizen des Ofenkörpers durch manuell mittels eines Werkzeugs eingeschoben.

Die GB-A-2 144 871 zeigt eine ähnliche Anordnung, bei welcher ein Probenträger durch einen seitlichen Schlitz in einen als Graphitrohr ausgebildeten Ofenkörper einschiebbar ist. Der Probenträger wird dabei vor der Aufheizung des Ofenkörpers in diesen eingeführt und ist nicht in wärmeleitendem Kontakt mit der Wandung des Ofenkörpers.

Die US-A-4 202 628 zeigt eine Vorrichtung zur elektothermischen Atomisierung von Proben, bei welcher ein als Graphitrohr ausgebildeter Ofenkörper in der Mitte eine topfförmige Ausbeulung aufweist, welche die Probe aufnimmt. Diese topfförmige Ausbeulung bildet aber einen integralen Teil des Graphitrohres und wird mit diesem ständig von dem Heizstrom durchflossen. Der elektrische Widerstand der Ausbeulung ist geringer als der des übrigen Graphitrohres, so daß die Temperatur der topfförmigen Ausbeulung geringer ist als der des übrigen Graphitrohres. Dadurch soll erreicht werden, daß sich der überwiegende Teil des gebildeten Atomdampfes in einem oberhalb der Ausbeulung befindlichen "Absorptionszellenteil" befindet. Das gilt dort aber auch für den stationären Zustand.

Die DE-A-23 23 774 zeigt einen als Graphitrohr ausgebildeten Ofenkörper, bei welchem die Innenwandung des Ofenkörpers mit Rillen oder einem Gewinde versehen ist. Dadurch wird einer Ausbreitung einer Probe zu den Enden des Graphitrohres hin entgegengewirkt.

Durch die DE-A-32 04 873 ist eine Vorrichtung zum automatischen Zuführen einer Probe in den Ofen eines Atomabsorptions - Spektrometers bekannt. Bei dieser Vorrichtung wird ein Probenträger mittels einer programmgesteuerten Greifvorrichtung in Längsrichtung in den Ofenraum des Ofenkörpers eingesetzt. Eine Mehrzahl von

Probenträgern ist dabei in einem beweglichen Probenträgerhalter angeordnet und werden nacheinander in den Bereichder Greifvorrichtung transportiert.

### Offenbarung der Erfindung

Der Erfindung liegt die Aufgabe zugrunde, eine Vorrichtung der eingangs definierten Art zur Atomisierung einer Probe für spektroskopische Zwecke so auszubilden, daß
- die Atomisierung der Probe gegenüber der Aufheizung des Ofenkörpers verzögert wird, so daß der Ofenkörper im wesentlichen seine Gleichgewichtstemperatur erreicht hat, wenn die Probe atomisiert wird,
- eine große Probenmenge aufgegeben werden kann und
- nur eine Heizung für die Atomisierung der Probe und für den Ofenkörper erforderlich ist.

Die Vorrichtung soll außerdem die Automatisierung der Probenaufgabe erleichtern, so daß mit konstruktiv einfachen Mitteln nacheinander unterschiedliche Proben in die Vorrichtung aufgegeben und atomisiert werden können.

Erfindungsgemäß wird diese Aufgabe dadurch gelöst, daß
(e) die Probenaufnahme ein einseitig offener Hohlkörper mit einer einen Rand bildenden Öffnung ist und
(f) die Probenaufnahme durch eine Antriebsvorrichtung zur Herstellung eines thermischen Kontaktes längs ihres Randes an den Ofenkörper um den Durchbruch herum anlegbar oder zur Unterbrechung dieses thermischen Kontaktes von dem Ofenkörper abhebbar ist.

Dadurch können große Probenmengen aufgegeben werden. Die Antriebsvorrichtung kann von einer Steuervorrichtung zusammen mit dem Heizstrom des Ofenkörpers so gesteuert sein, daß die Probenaufnahme während eines Trocknungs- und Zersetzungsschritts an dem Ofenkörper anliegt und anschließend durch die Antriebsvorrichtung von dem Ofenkörper abgehoben wird, der Ofenkörper anschließend bei abgehobener Probenaufnahme auf Atomisierungstemperatur aufgeheizt wird, bis eine Temperaturstabilisierung erreicht ist, und schließlich die Probenaufnahme durch die Antriebsvorrichtung wieder in Kontakt mit dem Ofenkörper bewegt wird. Die Antriebsvorrichtung kann mit der Probenaufnahme über ein schlecht wärmeleitendes Verbindungsglied verbunden sein. Dieses Verbindungsglied kann eine Stange aus einem schlecht wärmeleitenden Material sein, über welche die Antriebsvorrichtung an der Probenaufnahme angreift und die von der Antriebsvorrichtung in Längsrichtung der Stange bewegbar ist. Zur weiteren Verminderung der Wärmeableitung von der Probenaufnahme kann die Stange mit wenigstens einer Einschnürung versehen sein. Die Antriebsvorrichtung kann von einem druckmittelbetriebenen Hubzylinder oder einem Hubmagneten gebildet sein.

Die Erfindung bietet die Möglichkeit, daß Probenaufnahmen mit verschiedenen Proben durch eine Transportvorrichtung nacheinander in den Bereich der Antriebsvorrichtung bewegbar sind und die Antriebsvorrichtung die Probenaufnahmen nacheinander von der Transportvorrichtung abhebt und in Kontakt mit dem Ofenkörper bewegt.

Ein Ausführungsbeispiel der Erfindung ist nachstehend unter Bezugnahme auf die zugehörigen Zeichnungen näher erläutert.

### Kurze Beschreibung der Zeichnungen

- Fig.1: zeigt eine Draufsicht, teilweise im Schnitt, eines Ofens bei einer Vorrichtung zur Atomisierung einer Probe bei der Atomabsorptions - Spektroskopie.
- Fig.2: zeigt eine Seitenansicht des Ofens, ebenfalls teilweise im Schnitt.
- Fig.3: zeigt die Seitenansicht des Ofens ähnlich Fig.2 in Verbindung mit einer schematisch dargestellten Antriebsvorrichtung für die Probenaufnahme und einer ebenfalls schematisch als Drehtisch dargestellten Transportvorrichtung für eine Mehrzahl von Probenaufnahmen.
- Fig.4: zeigt einen Schnitt durch die Probenaufnahme.
- Fig.5: zeigt eine Draufsicht auf die Probenaufnahme.

### Bevorzugte Ausführung der Erfindung

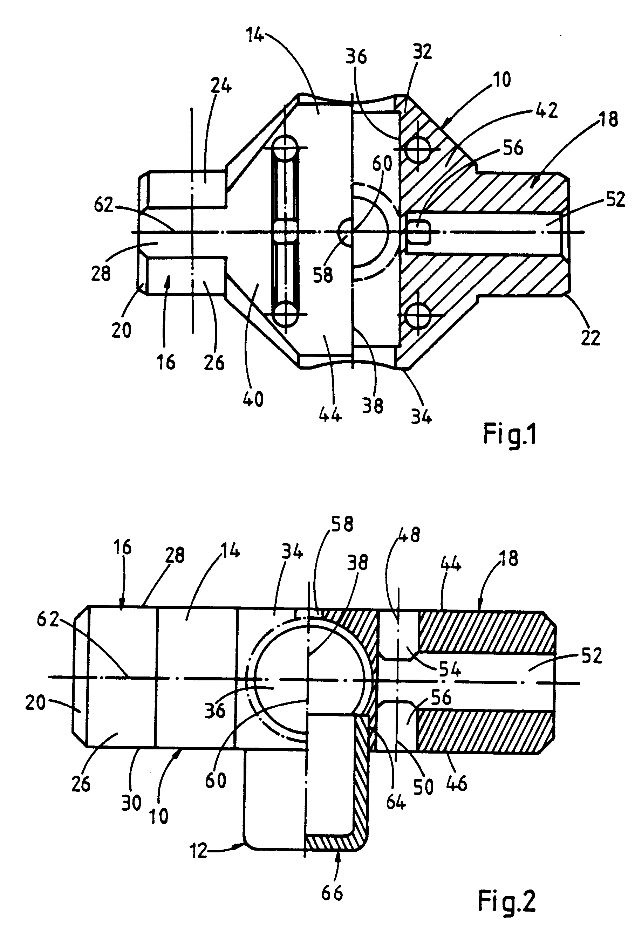

In Fig. 1 und 2 ist ein Ofen mit einem Ofenteil 10 aus Graphit und einer Probenaufnahme 12 in Form eines Topfes dargestellt. Die Probenaufnahme 12 besteht ebenfalls aus Graphit.

Der Ofenteil 10 ist aus einer Platte hergestellt und weist einen Mittelteil 14 von in Draufsicht regelmäßigachteckiger Grundform auf. An zwei diametral gegenüberliegenden Seitenflächen des achteckigen Mittelteils 14 sitzen Kontaktstücke 16 und 18. Die Kontaktstücke 16 und 18 weisen an ihren Enden konische Kontaktflächen 20 bzw. 22 auf. Wie aus dem linken Teil von Fig. 1 ersichtlich ist, haben die Kontaktstücke wie z.B. Kontaktstück 16 zylindrische Mantelflächen 24 und 26, die durch Planflächen 28 und 30 miteinander verbunden sind. Diese Planflächen 28 und 30 bilden einen Teil der planen Oberflächen der Platte, aus welcher der Ofenteil 10 geformt ist. Die beiden gegenüberliegenden Seitenflächen 32 und 34 des achteckigen Mittelteils 14, die senkrecht zu den die Kontaktstücke 16 und 18 tragenden Seitenflächen verlaufen, sind durch eine Bohrung 36 verbunden. Die Bohrung 36 bildet den Innenraum des Ofenteils 10. Durch die Bohrung 36 verläuft im Betrieb das Meßlichtbündel des Atomabsorptions - Spektrometers längs der Achse 38 der Bohrung.

Die übrigen, schräg verlaufenden Seitenflächen des Mittelteils 14 bilden trapezförmige Kontaktansätze 40 und 42 zwischen dem die Bohrung 36 enthaltenden Ofenabschnitt 44 und den Kontaktstücken 16 und 18. In den Kontaktansätzen 40 und 42, z.B. dem Kontaktansatz 42, sind parallel zur Achse 38 der Bohrung 36 in den beiden planen Oberflächen 44 und 46 der Platte Schlitze 48 bzw. 50 angebracht. Die Schlitze 48 und 50 bilden Einschnürungen der Kontaktansätze 40 bzw. 42 und wirken einer Wärmeableitung von dem Ofenabschnitt 44 entgegen. In den Kontaktansätzen 40 und 42 und in den Kontaktstücken 16 und 18, beispielsweise dem Kontaktabschnitt 42 und Kontaktstück 18, verlaufen Längskanäle 52. Die Längskanäle 52 schneiden, wie aus Fig. 2 ersichtlich ist, die Schlitze 48 und 50 an, so daß Durchgänge 54 bzw. 56 gebildet werden. Im Zentrum des Mittelteils 14 ist in der planen Oberfläche 44 eine Bohrung 58 angebracht. Die Bohrung 58 mündet in der Bohrung 36.

Die Achse dieser Bohrung 58 ist mit 60 bezeichnet. Die Achse der Kontaktstücke 16 und 18 und der Bohrungen 52 ist mit 62 bezeichnet. Die Achsen 38, 60 und 62 schneiden sich in einem Punkt und sind zueinander senkrecht.

In der planen Oberfläche 46 auf der der Bohrung 58 gegenüberliegenden Seite ist eine flach-zylindrische Vertiefung 64 gebildet. Die Vertiefung 64 schneidet die Bohrung 36 an, wie aus Fig.2 am besten ersichtlich ist. In diese Vertiefung 64 ist eine Probenaufnahme 66 in Form eines Topfes aus Graphit einsetzbar. Die Ränder der topfförmigen Probenaufnahme 66 sind dann in wärmeleitendem Kontakt mit dem Ofenkörper 10.

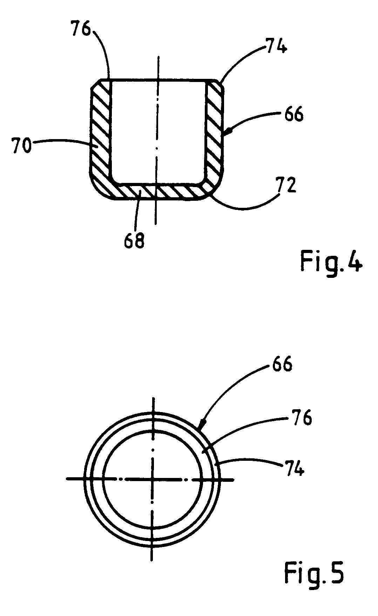

Die Probenaufnahme 66 ist in Fig.4 und 5 im einzelnen dargestellt.

Die Probenaufnahme 66 bildet einen Topf mit einem Boden 68 und einer zylindrischen Seitenwandung 70. Der Boden 68 ist mit der Seitenwandung 70 über eine abgerundete Kante 72 verbunden. An der Stirnfläche der Seitenwandung 70 ist außen eine konische Fläche 74 gebildet, an welche sich eine plane Ringfläche 76 anschließt. Die konische Fläche 74 erleichtert die Einführung des oberen Randes der Seitenwandung 70 in die Vertiefung 64 des Ofenteils 10. Die plane Ringfläche 76 gewährleistet sicheren Kontakt mit den auf dem Grunde der Vertiefung 64 beiderseits der Bohrung 36 gebildeten planen Flächen des Ofenteils 10.

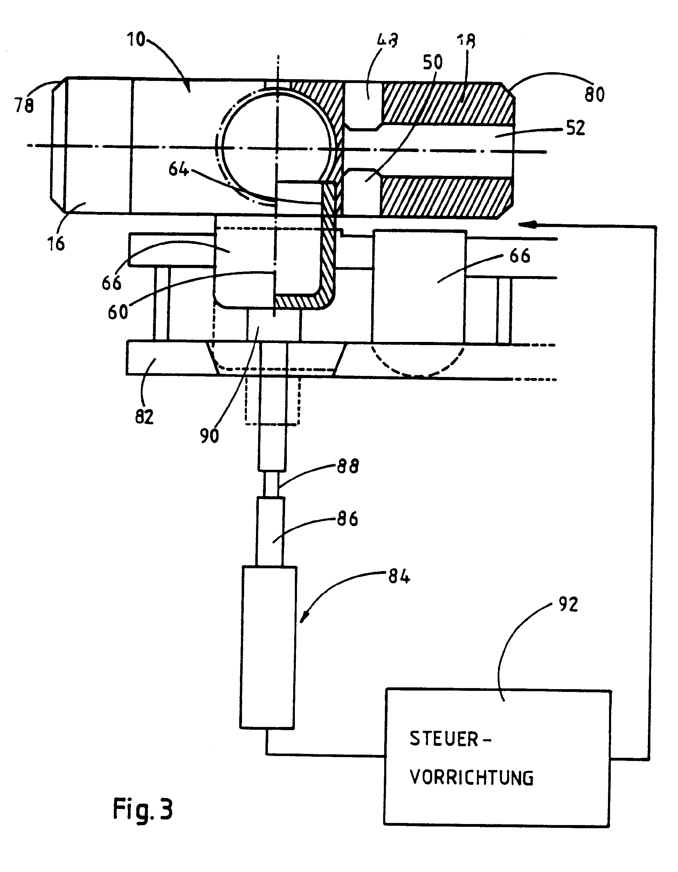

Fig.3 zeigt schematisch den beschriebenen Ofen im Betrieb.

Der Ofenteil 10 ist mit seinen Kontaktstücken 16 und 18 und den konischen Kontaktflächen 20 bzw. 22 zwischen gerätefesten Kontakten 78 bzw 80 gehalten. Die Kontakte 78 und 80 sind auch aus Graphit und hier nur schematisch dargestellt. Ein Drehtisch 82 oder eine andere, ähnlichwirkende Transportvorrichtung erstreckt sich bis unter den Ofenteil 10. In dem Drehtisch 82 sind eine Mehrzahl von Probenaufnahmen 66 der in Fig. 4 und 5 dargestellten Art gehaltert. In der Ruhestellung befinden sich die Probenaufnahmen, 66 wie in Fig.3 gestrichelt dargestellt ist, im Abstand unterhalb des Ofenteils 10. In dieser Stellung sind die Probenaufnahmen 66 weder in elektrischem noch in wärmeleitendem Kontakt mit dem Ofenteil. In den verschiedenen Betriebsstellungen des Drehtisches ist jeweils eine der Probenaufnahmen 66 fluchtend zu der Vertiefung 64 des Ofenteils 10 ausgerichtet.

Die topfförmige Probenaufnahme 66 kann nun durch eine Antriebsvorrichtung 84 von dem Drehtisch 82 abgehoben und in die Vertiefung 64 hineingedrückt werden. Diese Antriebsvorrichtung 84 kann ein druckmittelbetriebener Hubzylinder oder ein Hubmagnet sein. Damit durch den Kontakt zwischen Antriebsvorrichtung 84 und Probenaufnahme 66 keine unerwünschte Wärmeableitung von der Probenaufnahme 66 erfolgt, greift die Antriebsvorrichtung 84 an der topfförmigen Probenaufnahme 66 über eine Stange 86 aus einem schlecht wärmeleitenden Material an. Die Stange 86 erstreckt sich in Hubrichtung der Antriebsvorrichtung 84.

Wenn die Antriebsvorrichtung 84 beispielsweise ein Hubzylinder ist, dann bildet die Stange 86 die Kolbenstange des Hubzylinders oder eine Verlängerung derselben. Um die Wärmeableitung weiter zu reduzieren ist in der Stange 86 eine Einschnürung 88 angebracht. Am ofenseitigen Ende trägt die Stange 86 einen Teller 90. Die Stange 86 und die Drehachse des Drehtischs 82 sind parallel zu der Achse 60 des Ofens. Der Teller 90 legt sich an den Boden 68 der topfförmigen Probenaufnahme 66 an und hebt die Probenaufnahme 66 gegenüber dem Drehtisch 82 an und drückt sie in die Vertiefung 64 des Ofenkörpers 10. Es wird dann über die Ringfläche 76 ein enger elektrischer und wärmeleitender Kontakt zwischen Probenaufnahme 66 und Ofenkörper 10 hergestellt.

Die Antriebsvorrichtung 84 sowie der Strom, der über die Kontakte 78,80 durch den Ofenkörper 10 geleitet wird, sind von einer Steuervorrichtung 92, wie in Fig.3 angedeutet, steuerbar.

Die beschriebene Anordnung arbeitet wie folgt:

Zu untersuchende Proben werden in die Probenaufnahmen 66 eingebracht. Die Probenaufnahmen 66 werden in den Drehtisch gesetzt. Nacheinander werden die verschiedenen Probenaufnahmen in ihre Betriebsstellung unterhalb des Ofenteils 10 gebracht.

Die Antriebsvorrichtung 84 bringt die Probenaufnahme 66 mit ihrer Ringfläche 76 zur Anlage an der planen Fläche auf dem Grunde der Vertiefung 64. Dann wird durch den Ofenkörper 10 über die Kontakte 78 und 80 ein elektrischer Strom geleitet, der den Ofenkörper auf eine Trocknungstemperatur und anschließend auf eine Veraschungstemperatur aufheizt. Über die Kontakte 78 und 80 und die Kanäle 52 wird außerdem ein Schutzgasstrom zugeführt. Dieser Schutzgasstrom wird über die Schlitze 48 und 50 um den Ofenkörper herum verteilt. Er tritt auch in die Bohrung 36 ein. Dieser Teilstrom fließt durch die Bohrung 58 ab und nimmt Trocknungs- und Veraschungsprodukte mit. Bei diesem Vorgang ist nicht nur die Probenaufnahme 66 in wärmeleitendem Kontakt mit dem Ofenkörper 10. Es fließt auch ein Teil des elektrischen Stromes über die Probenaufnahme, so daß auch in dieser selbst Joulesche Wärme erzeugt wird.

Nach dem Trocknungs- und Veraschungsprozess wird die Probenaufnahme 66 wieder abgesenkt. Sie ist dann, wie in Fig.3 gestrichelt dargestellt ist, im Abstand unterhalb des Ofenkörpers 10 angeordnet. Jetzt wird zunächst der Ofenkörper 10 von einem starken Strom durchflossen und auf die Atomisierungstemperatur aufgeheizt. Die Probenaufnahme 66 beeinflußt das zunächst kaum. Wenn der Ofenkörper einen Gleichgewichtszustand erreicht hat und mit allen Wandungsteilen auf Atomisierungstemperatur ist, wird die Probenaufnahme wieder angehoben. Sie wird in die Vertiefung 64 hineinbewegt und kommt wieder in wärmeleitenden Kontakt mit dem Ofenkörper. Jetzt erfolgt in bekannter Weise die Atomisierung der Probe und die Bildung der "Atomwolke". Dies geschieht aber mit definierter Verzögerung gegenüber der Aufheizung des Ofenkörpers 10.

Durch die beschriebene Anordnung werden verschiedene Vorteile gleichzeitig erreicht:
- Es können große Probenmengen atomisiert werden.
- Die Atomisierung der Probe erfolgt mit einer genau definierten Verzögerung gegenüber der Aufheizung des Ofenkörpers auf die Atomisierungstemperatur.
- Es ist eine Automatisierung der Analyse einer Mehrzahl von Proben mit ziemlich einfachen Mitteln möglich, indem verschiedene Probenaufnahmen durch einen Drehtisch nacheinander unter den Ofenkörper bewegt und mittels einer Antriebsvorrichtung gegen den Ofenkörper gedrückt werden.

## Patentansprüche

1. Vorrichtung zum elektrothermischen Atomisieren von Proben für spektroskopische Zwecke, enthaltend
(a) einen Ofenkörper (10) aus einem elektrisch leitenden, spektroskopisch inerten Material,
(b) einen seitlichen Durchbruch in dem Ofenkörper,
(c) Mittel zum Hindurchleiten von elektrischem Strom durch diesen Ofenkörper (10),
(d) eine von dem Ofenkörper (10) getrennte Probenaufnahme (66), die mit dem seitlichen Durchbruch (64) des Ofenkörpers (10) zusammenwirkt,
**dadurch gekennzeichnet, daß**
(e) die Probenaufnahme (66) ein einseitig offener Hohlkörper mit einer einen Rand (74,76) bildenden Öffnung ist und
(f) die Probenaufnahme (66) durch eine Antriebsvorrichtung (84) zur Herstellung eines thermischen Kontaktes längs ihres Randes an den Ofenkörper (10) um den Durchbruch (64) herum anlegbar oder zur Unterbrechung dieses thermischen Kontaktes von dem Ofenkörper abhebbar ist.

2. Vorrichtung nach Anspruch 1, **dadurch gekennzeichnet, daß** die Probenaufnahme (66) ein Topf ist.

3. Vorrichtung nach Anspruch 1 oder 2, **dadurch gekennzeichnet, daß** die Antriebsvorrichtung (84) von einer Steuervorrichtung (92) zusammen mit dem Heizstrom des Ofenkörpers (10) so gesteuert ist, daß
- die Probenaufnahme (66) während eines Trocknungs- und Zersetzungsschritts an dem Ofenkörper (10) anliegt und anschließend durch die Antriebsvorrichtung (84) von dem Ofenkörper (10) abgehoben wird,
- der Ofenkörper (10) anschließend bei abgehobener Probenaufnahme (66) auf Atomisierungstemperatur aufgeheizt wird, bis eine Temperaturstabilisierung erreicht ist, und
- schließlich die Probenaufnahme (66) durch die Antriebsvorrichtung (84) wieder in Kontakt mit dem Ofenkörper (10) bewegt wird.

4. Vorrichtung nach einem der Ansprüche 1 bis 3, **dadurch gekennzeichnet, daß** die Antriebsvorrichtung (84) mit der Probenaufnahme (66) über ein schlecht wärmeleitendes Verbindungsglied (86) verbunden ist.

5. Vorrichtung nach Anspruch 4, **dadurch gekennzeichnet, daß** das Verbindungsglied (86) eine Stange aus einem schlecht wärmeleitenden Material ist, über welche die Antriebsvorrichtung (84) an der Probenaufnahme (66) angreift und die von der Antriebsvorrichtung (84) in Längsrichtung der Stange (86) bewegbar ist.

6. Vorrichtung nach Anspruch 5, **dadurch gekennzeichnet, daß** die Stange (86) mit wenigstens einer Einschnürung (88) versehen ist.

7. Vorrichtung nach einem der Ansprüche 1 bis 6, **dadurch gekennzeichnet, daß** die Antriebsvorrichtung (84) von einem druckmittelbetriebenen Hubzylinder gebildet ist.

8. Vorrichtung nach einem der Ansprüche 1 bis 6, **dadurch gekennzeichnet, daß** die Antriebsvorrichtung (84) von einem Hubmagneten gebildet ist.

9. Vorrichtung nach einem der Ansprüche 1 bis 8, **dadurch gekennzeichnet, daß**
(a) Probenaufnahmen (66) mit verschiedenen Proben durch eine Transportvorrichtung (82) nacheinander in den Bereich der Antriebsvorrichtung (84) bewegbar sind und
(b) die Antriebsvorrichtung (84) die Probenaufnahmen (66) nacheinander von der Transportvorrichtung (82) abhebt und in Kontakt mit dem Ofenkörper (10) bewegt.

## Claims

1. Device for electrothermal atomisation of samples for spectroscopic purposes, comprising
(a) a furnace body (10) of an electrically conductive, spectroscopically inert material,
(b) a lateral aperture in the furnace body,
(c) means for passing electrical current through this furnace body (10),
(d) a sample accomodation (66) separated from the furnace body (10), which sample accomodation cooperates with the lateral aperture (64) of the furnace body (10),
**characterized in that**
(e) the sample accomodation (66) is a hollow body open on one side, having an opening forming an edge (74, 76), and
(f) the sample accomodation (66) is arranged to be moved by a driving device to engage, along its edge, the furnace body (10) around the aperture (64) for providing a thermal contact, or to be removed from the furnace body for interrupting this thermal contact.

2. Device as set forth in claim 1, **characterized in that** the sample accomodation (66) is a pot.

3. Device as set forth in claim 1 or 2, **characterized in that** the driving device (84) is controlled by a control device (92) together with the heating current of the furnace body (10) such that
- during a drying and decomposing step, the sample accomodation (66) engages the furnace body (10), and is then removed from the furnace body (10) by the driving device (84),
- the furnace body (10) is then heated to atomisation temperature with the sample accomodation (66) removed, until temperature stabilisation is obtained, and
- finally, the sample accomodation (66) is again moved into contact with the furnace body (10) by the driving device (84).

4. Device as set forth in on of claims 1 to 3, **characterized in that** the driving device (84) is connected to the sample accomodation (66) through a connection member (86) of poor thermal conductivity.

5. Device as set forth in claim 4, **characterized in that** the connection member (86) is a bar of a material of poor thermal conductivity, through which the driving device (84) engages the sample accomodation (66) and the sample accomodation is movable longtitudinally of the bar (86) by the driving device (84).

6. Device as set forth in claim 5, **characterized in that** the bar (86) is provided with at least one reduced diameter section (88).

7. Device as set forth in one of claims 1 to 6, **characterized in that** the driving device (84) is formed by a fluid operated jack.

8. Device as set forth in one of claims 1 to 6, **characterized in that** the driving device (84) is formed by a solenoid.

9. Device as set forth in one of claims 1 to 8, **characterized in that**
(a) sample accomodations with different samples are movable by a transport device (82) one after the other in the range of the driving device (84), and
(b) the driving device (84) removes the sample accomodations (66) one after the other from the transport device (82) and moves them in contact with the furnace body (10).

## Revendications

1. Dispositif destiné à l'atomisation électrothermique d'échantillons à des fins spectroscopiques, comprenant
(a) un corps de four (10) d'une matière spectroscopiquement inerte et électriquement conductive,
(b) un percement latéral dans le corps de four,
(c) des moyens destinés à conduire un courant électrique à travers ce corps de four (10),
(d) une enceinte à échantillon (66) séparée du corps de four (10) et coopérant avec le percement latéral (64) du corps de four (10),
**caractérisé par le fait que**
(e) l'enceinte à échantillon (66) est un corps creux ouvert sur un côté avec une ouverture formant un bord (74,76), et
(f) l'enceinte à échantillon (66) est susceptible d'être appliquée le long de son bord au corps de four (10) autour du percement (64) en vue d'établir un contact thermique, ou enlevée du corps de four en vue d'interrompre ce contact thermique.

2. Dispositif selon la revendication 1, **caractérisé par le fait que** l'enceinte à échantillon (66) est un pot.

3. Dispositif selon la revendication 1 ou 2, **caractérisé par le fait que** le dispositif d'entraînement (84) est commandé par un dispositif de commande (92) conjointement avec le courant de chauffage du corps de four (10) de sorte que
- lors d'une étape de séchage et de décomposition l'enceinte à échantillon (66) est en contact avec le corps de four (10) et est ensuite enlevé du corps de four (10) par le dispositif d'entraînement (84),
- le corps de four (10) est ensuite chauffé à la température d'atomisation avec l'enceinte à échantillon (66) enlevée, jusqu'à avoir atteint une stabilisation de température, et
- enfin, l'enceinte à échantillon (66) est de nouveau déplacée en contact avec le corps de four (10) par le dispositif d'entraînement (84).

4. Dispositif selon l'une des revendications 1 à 3, **caractérisé par le fait que** le dispositif d'entraînement (84) est relié à l'enceinte à échantillon (66) par un membre de connexion (86) à mauvaise conductivité thermique.

5. Dispositif selon la revendication 4, **caractérisé par le fait que** le membre de connexion (86) est une tige d'une matière à mauvaise conductivité thermique, par laquelle le dispositif d'entraînement (84) est appliqué à l'enceinte à échantillon (66), et celle-ci est susceptible d'être déplacée par le dispositif d'entraînement (84) dans la direction longitudinale de la tige (86).

6. Dispositif selon la revendication 5, **caractérisé par le fait que** la tige (86) est munie d'une striction (88) au moins.

7. Dispositif selon l'une des revendications 1 à 6, **caractérisé par le fait que** le dispositif d'entraînement (84) est formé par un cylindre de levage actionné par fluide.

8. Dispositif selon l'une des revendications 1 à 8, **caractérisé par le fait que** le dispositif d'entraînement (84) est formé par un électroaimant de levage.

9. Dispositif selon l'une des revendications 1 à 8, caractérisé par le fait que
(a) les enceintes à échantillon (66) avec des échantillons différents sont susceptibles d'être déplacées par un dispositif de transport successivement dans le domaine du dispositif d'entraînement (84), et
(b) le dispositif d'entraînement (84) enlève successivement les enceintes à échantillon (66) du dispositif de transport (82) et les déplace en contact avec le corps de four (10).
